# EUROPEAN PATENT SPECIFICATION

(11) **EP 1 758 389 B1**
(45) Date of publication and mention of the grant of the patent: **02.04.2008**
(21) Application number: 05018598.2
(22) Date of filing: 26.08.2005
(51) Int. Cl.: H04N 5/74, G03B 31/06, G09B 5/06

(54) **Projecting device capable of synchronously encoding images and sounds into an audio/video synchronous play file**
Projektionsvorrichtung mit der Fähigkeit, Bilder und Töne synchron in eine Audio- und Videodatei zur synchronen Audio-Video-Wiedergabe zu kodieren
Dispositif de projection capable de coder de manière synchrone des images et des sons dans un fichier audio/vidéo destiné à la reproduction audio-vidéo synchrone

(43) Date of publication of application: 28.02.2007
(73) Proprietor: Avermedia Technologies, Inc., Taipei County 235 (TW)
(72) Inventor: Kuo, Chung-Song, Jhonghe City Taipei County 235 (TW); Hung, Po-Chih, Jhonghe City Taipei County 235 (TW); Wu, Jiun-Shin, Jhonghe City Taipei County 235 (TW); Wu, Yung-Hsi, Jhonghe City Taipei County 235 (TW)
(74) Representative: Görz, Ingo

(56) References cited:
- US-A- 4 121 263
- US-A- 4 698 683
- US-A- 5 949 087
- US-A1- 2004 250 015
- US-A1- 2005 046 803
- US-A1- 2005 088 621

## Description

### BACKGROUND OF THE INVENTION

### Field of the Invention

The invention relates in general to a projecting device, and more particularly to a projecting device capable of synchronously encoding images and sounds into an audio/video (AV) synchronous play file.

US 2005/0088621 A1 discloses a projector that plays recording mediums, such as DVD and video tapes, which switches between a projection image to another image by stopping or suspending playback, or starting a playback or recording operation. When a break switch is depressed while the image playback portion is playing back images, data of guiding image or data of sounds generated in an outside device or the like, which are stored in the projector, are selected, so that the selected guiding image or sounds can be used when the playback is suspended to enable a viewer to take a break comfortably.

US 2005/0046803 A1 discloses a projection apparatus comprising a projection section for projecting an image corresponding to an image signal and focus control section for making keystone correction on an image projected by the projection section so that a projection image is formed into a rectangular shape having a proper aspect ratio.

US 4,698,683 discloses a kit for converting a conventional slide or motion picture projector to a closed circuit television device primarily for classroom, seminar and home entertainment use, consisting of two main modules; a new lamp which substitutes for the normal projection lamp, and a lens-video camera combination which takes the place of the normal projection lens. The features and characteristics of the projector itself remain unchanged. The signal from the lens-television module can be viewed on a video screen, or recorded on a video recorder with or without modification by accessory components.

US 2004/0250015 A1 discloses a data management method which causes equipment such as a camera integral-type recording and reproducing apparatus to manage an external reference type container file and an audiovisual stream file by designating a hidden attribution to all the external reference type container files recorded in a disk. Therefore, reproduction of the container file can be performed in the main body of the equipment, and only the audiovisual stream file can be reproduced when the disk is reproduced in, e.g. a personal computer.

US 5,949,087 teaches a method and apparatus for use in stabilizing images. The invention operates to sense the position of the image to be stabilized, compare the position of the image to a reference to determine a displacement value responsive thereto and change a correction element located in the conveyance path of the image in response to the displacement value to cause a compensating displacement of the image.

Along with scientific development, optical projecting systems are invented and widely applied to various fields, such as entertainment facilities and equipments for business affairs, image projecting systems utilized in a large-scaled conference speech for magnifying projection films, or commercial large-scaled rear-projection TVs. The present projecting devices include an image output projecting device, an object projecting device, and a film projecting device. The image output projecting device can project a computer's pictures onto a wall as electrically coupled to the computer while the object projecting device can project a clear and magnified image of any object, such as documents or substances, placed within its image capturing range, onto the wall. As for the film projecting device, when the user places a projection film on its projecting flatbed, the film projecting device can magnify the light passing through the projection film and then project an image corresponding to the content of projection film onto the wall in an optical way. Therefore, the user can write directly on the projection film and the audience can observe the lively process that the user writes from the image projected onto the wall.

When the presenter gives a brief by using the above-mentioned projecting device, the audience are usually given materials relevant to the brief, therefore, the audience can observe the image projected by the projecting device, while listening to presenter's explanation about the brief and taking notes in the given materials. After finishing the brief, the presenter may share electronic files of brief materials with the audience generously. However, after a period of time when these persons pick up the brief materials or review their electronic files, they may forget why they have taken the notes in the brief materials, or may not understand partial contents of the brief materials, or feel even confused due to inconsistency of the brief materials from beginning to end.

Although the audience can use a video camera to record images and sounds in process of presentation, however, the video camera usually outputs very large AV files and is thus not convenient for the audience to carry for review.

Even if the audience records sounds of the presenter into an audio file by a recording pen, the audience may also feel confused about which part of the brief materials corresponds to a specific portion of audio files as they review the brief materials in the future.

### SUMMARY OF THE INVENTION

It is therefore an object of the invention to provide a projecting device capable of synchronously encoding images and sounds into an AV synchronous play file. By encoding images and sounds synchronously as an AV synchronous play file In the process when the presenter gives a brief, the audience can read the image content while listening to the recorded sound corresponding to the image as they open the AV synchronous play file in the future. Therefore, the audience can quickly regain the lively feeling as attending the conference before and achieve the purpose of reviewing and revising the brief materials. It can be prevented not only the unfamiliar feeling occurred as reviewing the brief materials in the future but also the confusing issue due to inconsistency of the brief materials from beginning to end in the future review, thereby greatly increasing practicality of the projecting device.

The invention achieves the above-identified object by providing a projecting device according to independent claim 1.

The dependent claims pertain to the preferred embodiment thereof.

Other objects, features, and advantages of the invention will become apparent from the following detailed description of the preferred but non-limiting embodiment. The following description is made with reference to the accompanying drawings.

### BRIEF DESCRIPTION OF THE DRAWINGS

FIG. 1A shows a block diagram of a projecting device capable of synchronously encoding images and sounds into an AV synchronous play file according to an embodiment of the invention.

FIG. 1B shows a solid view of an electronic device equipped with a projecting device capable of synchronously encoding images and sounds into an AV synchronous play file according to an embodiment of the invention.

FIG. 2A shows the block diagram of an example, not forming part of the invention, of a projecting device capable of synchronously encoding images and sounds into an AV synchronous play file, an external projecting device, and a recoriding medium.

FIG. 2B shows the solid view of an example, not forming part of the invention, of a projecting device capable of synchronously encoding images and sounds into an AV synchronous play file, an object, and an external projecting device.

FIG. 3A shows block diagram of an example, not forming part of the invention, of a projecting device capable of synchronously encoding images and sounds into an AV synchronous play file.

FIG. 3B shows the solid view of an example, not forming part of the invention, of a projecting device capable of synchronously encoding images and sounds into an AV synchronous play file, and a projection film.

### DETAILED DESCRIPTION OF THE INVENTION

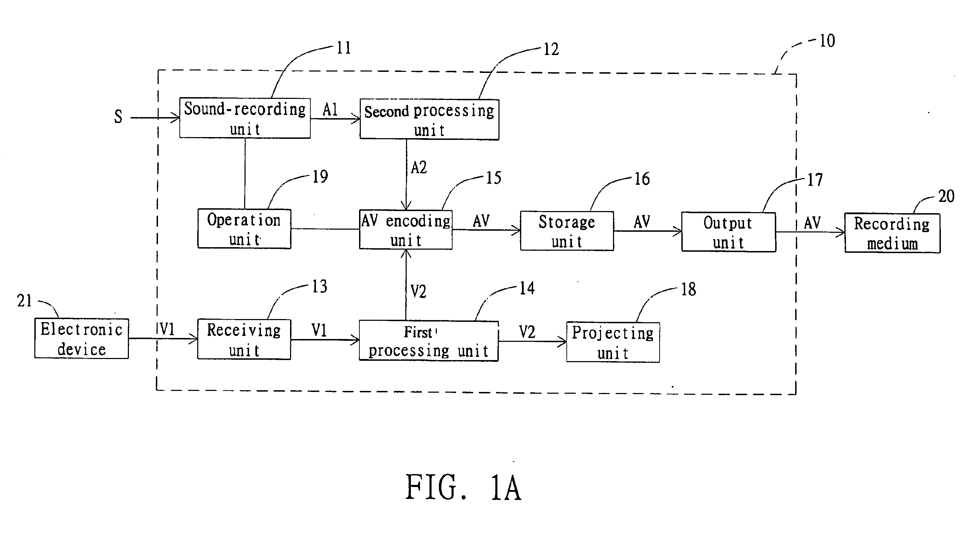

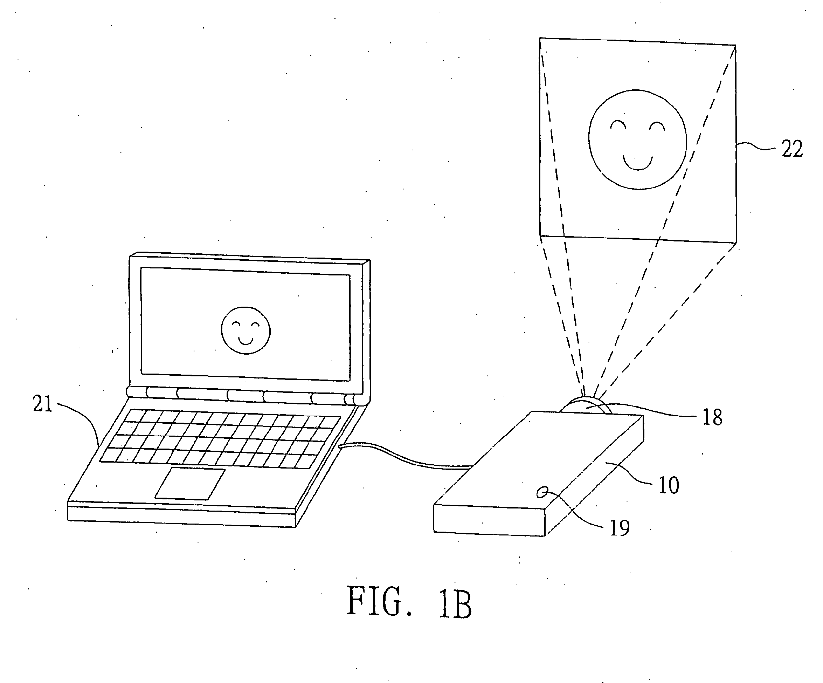

FIG. 1A shows a block diagram of a projecting device capable of synchronously encoding images and sounds into an AV synchronous play file according to an embodiment of the invention while FIG. 1B shows a solid view of an electronic device equipped with a projecting device capable of synchronously encoding images and sounds into an AV synchronous play file according to an embodiment of the invention. Referring to FIGS. 1A and 1B at the same time, the projecting device 10 includes a receiving unit 13, a first processing unit 14, a projecting unit 18, a sound-recording unit 11, a second processing unit 12, and an AV encoding unit 15. The receiving unit 13, electrically coupled to an electronic device 21, is for receiving a first video signal V1 from the electronic device 21. The electronic device 21 can be a computer, such as a desktop computer, a notebook computer, a laptop computer, and a handheld computer, or a portable electronic device, such as a mobile phone and a personal digital assistant. In the embodiment, a notebook computer is taken as an example for the electronic device 21.

The first processing unit 14, electrically coupled to the receiving unit 13, is for receiving and processing the first video signal V1, and outputting a second video signal V2. For example, the first processing unit 14 performs chroma and brightness strengthening processing on the first video signal V1 to output the second video signal V2 with a better image quality. The projecting unit 18, electrically coupled to the first processing unit 14, is for receiving the second video signal V2 and projecting the image 22 corresponding to the second video signal V2 onto a wall.

The sound-recording unit 11 records the sound S of a user as explaining the image corresponding to the second video signal V2 and outputs a first audio signal A1 accordingly. The second processing unit 12, electrically coupled to the sound-recording unit 11, is for receiving and processing the first audio signal A1 to output a second audio signal A2. For example, the second processing unit 12 can reduce the first audio signal A1 in a DC offset way and then filters noises and background voices off the first audio signal A1 to make the user's sound stand out. The AV encoding unit 15, electrically coupled to the first processing unit 14 and the second processing unit 12, is for receiving and synchronously encoding the second video signal V2 and the second audio signal A2 into a AV synchronous play file AV according to a timing process.

In the embodiment, the projecting device 10 further includes a storage unit 16, electrically coupled to the AV encoding unit 15, for receiving and storing the AV synchronous play file AV. Moreover, the projecting device further includes an output unit 17, electrically coupled to the storage unit 16, for outputting the AV synchronous play file AV to a recording media 20. Besides, the projecting device includes an operation unit, disposed on the housing of the projecting device 10, and electrically coupled to the sound-recording unit 11 and the AV encoding unit 15. When the user presses the operation unit 19, the projecting device 10 actuates the sound-recording unit 11 and the AV encoding unit 15. When the user presses the operation unit 19 once again, the projecting device 10 stops operation of the sound-recording unit 11 and the AV encoding unit 15. The user can starts and stop the recording and AV encoding operation of the projecting device 11 by hand through the operation unit 19.

In addition, the projecting device 11 can start the sound-recording unit 11 and AV encoding unit 15 as the projecting unit 18 is projecting the image 22 corresponding to the second video signal V2 onto the wall. The projecting device can stop operation of the sound-recording unit 11 and AV encoding unit 15 after the AV encoding unit 18 has output the AV synchronous play file so as to achieve the purpose of automatically starting or stopping the recording and AV encoding process. In the embodiment, the user can control the projecting device to actuate and stop sound recording and AV encoding operation.

When the user gives a brief by using the projecting device 10 and the electronic device 21, the user can use the projecting device 10 to project brief documents of the electronic device 21 onto the wall while recording his/her sound of explaining the brief documents. The projecting device 10 encodes synchronously the image projected onto the wall and the sound of explaining the brief documents into an AV synchronous play file according to a timing process. The audience can open the AV synchronous play file to regain the lively feeling as attending the user's brief in the future.

One who has general knowledge in the field of skills the embodiment belongs to will know that the skill of the invention is not limited thereto. For example, the AV encoding unit 15 can include a MPEG AV encoder, such as a MPEG 2/4 AV encoder. The storage unit 16 can include a memory or a hard disc, and the receiving unit 11 can include a universal serial bus (USB) receiving terminal or an IEEE 1394 output terminal. Moreover, the recording media 20 can include a mobile disk or a memory card, for instance, a stamp-size memory card such as a secure digital card, a multimedia card, a compact flash typel / II card, a smart media card, an IBM^{®} Microdrive memory card, a Sony® memory stick, a Sony® memory stick-pro, and an xD memory card. The operation unit 19 can be a keyboard or a touch pad.

In the embodiment, images and sounds of the presenter as giving a brief are synchronously encoded into an AV synchronous play file so that the audience can open the AV synchronous play file to read the image content while listening to the sound corresponding to the image in the future. Therefore, the audience can quickly regain the lively feeling as attending the brief before and achieve the purpose of reviewing and revising the brief materials. It can be prevented not only the unfamiliar feeling occurred as reviewing the brief materials in the future but also the confusing issue due to inconsistency of the brief materials from beginning to end in the future review, thereby greatly increasing practicality of the projecting device.

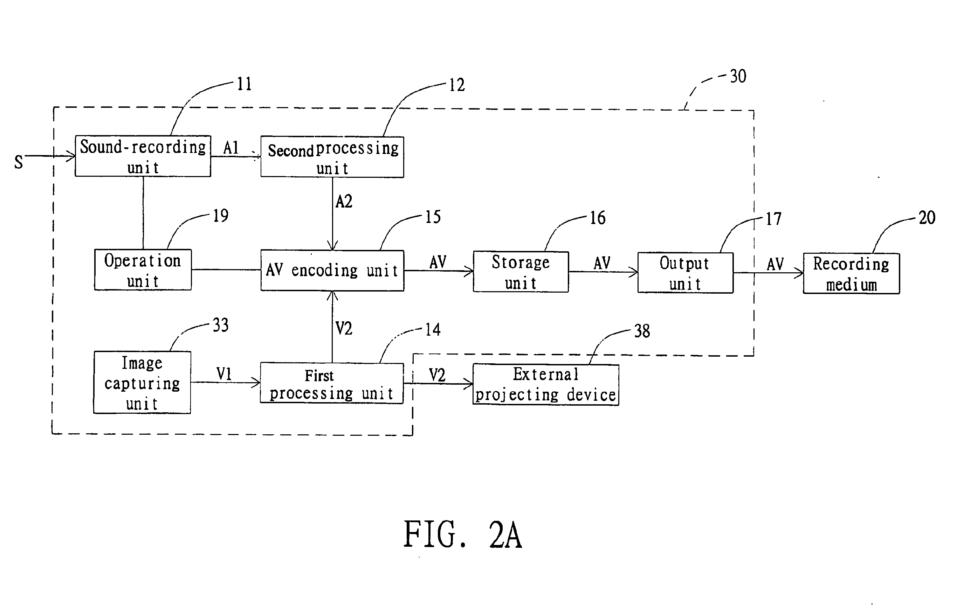

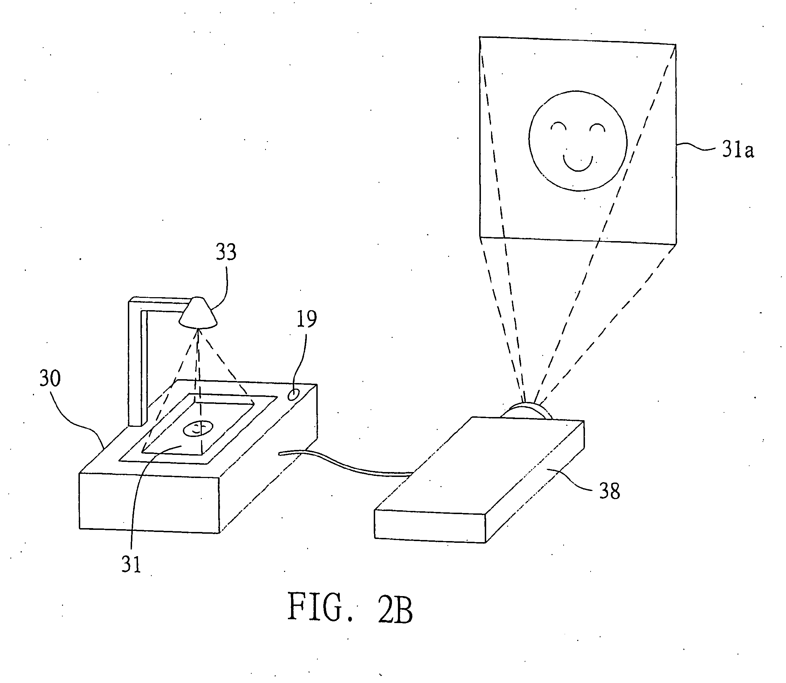

FIG. 2A shows the block diagram of an example, not forming part of the invention, of a projecting device capable of synchronously encoding images and sounds into an AV synchronous play file, an external projecting device, and a recoriding medium while FIG. 2B shows a solid view of a projecting device capable of synchronously encoding images and sounds into an AV synchronous play file, an object, and an external projecting device according to the example. Referring to FIGS. 2A and 2B at the same time, the projecting device 30 of the example includes an image capturing unit 33, but has no the projecting unit 18 and the receiving unit 13, which is different from the projecting device 10 in the first embodiment. The components of the projecting device 30, the same with those of the projecting device 10, are given the same labels as in the first embodiment and are not necessarily described in detail any more. In the example an object projector is taken as an example for the projecting device 30.

In FIGS. 2A and 2B, the image capturing unit 33 is for capturing the image of an object 31 and outputting a first video signal V1 accordingly. The first processing unit 14, electrically coupled to an external projecting device 38, is for receiving and processing the first video signal V1 and outputting a second video signal V2 to the external projecting device 38 accordingly, and the external projecting device 38 projects the image 31a corresponding to the second video signal V2 onto a wall.

One who has general knowledge in the field of skills the example belongs to will know that the skill of the invention is not limited thereto. For example, the projecting device 30 actuates the sound-recording unit 11 and the AV encoding unit 15 as the external projecting device 38 projects the image 31a corresponding to the second video signal V2 onto the wall while the projecting device 30 stops operation of the sound-recording unit 11 and the AV encoding unit 15 after the AV encoding unit 11 outputs the AV synchronous play file AV. Moreover, the image capturing unit 33 includes a complementary metal-oxide semiconductor or a charge coupled device (CCD).

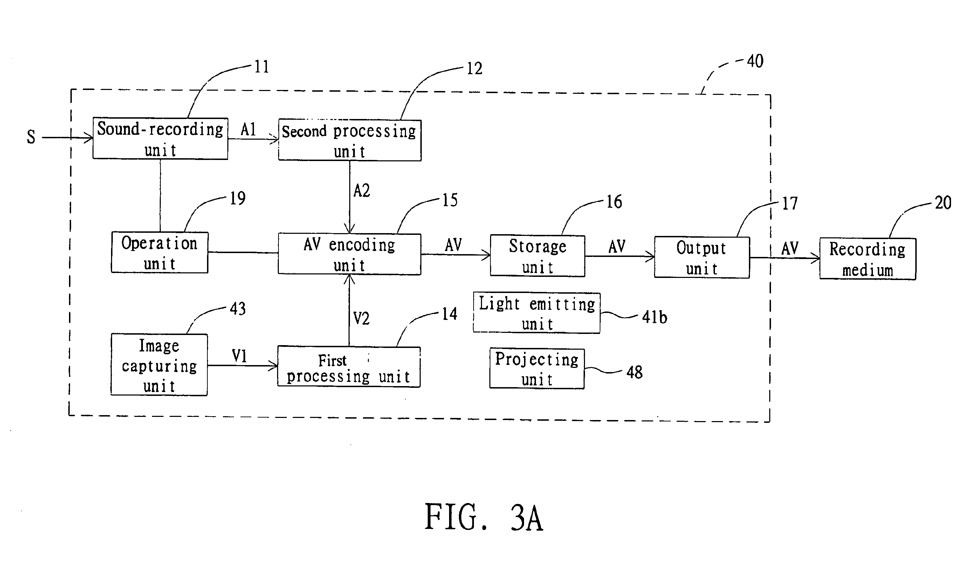

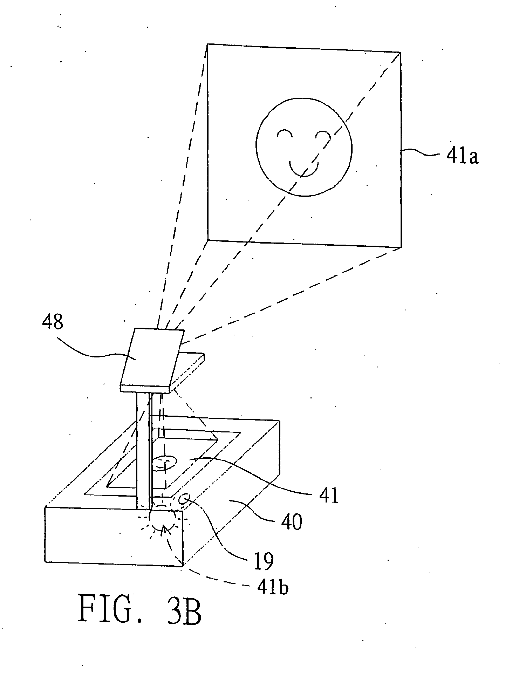

FIG. 3A shows the block diagram of another example, not forming part of the invention, of a projecting device capable of synchronously encoding images and sounds into an AV synchronous play file while FIG. 3B shows a solid view of a projecting device capable of synchronously encoding images and sounds into an AV synchronous play file, and a projection film according to the example. Referring to FIGS. 3A and 3B at the same time, the projecting device 40 of the embodiment includes a light emitting unit 41b, a projecting unit 48, and an image capturing unit 43, but has no the receiving unit 13, which is different from the projecting device 10 in the first embodiment. The components of the projecting device 30, the same with those of the projecting device 10, are given the same labels as in the first embodiment and are not necessarily described in detail any more. In the example a film projector is taken as an example for the projecting device 40.

In FIGS. 3A and 3B, the projection film 41 is placed on the projecting flatbed of the projecting device 40. The light emitting unit 41b emits a beam of light to the projection film 41 while the projecting unit 48 magnifies and projects the light passing through the projection film 41 onto a wall to display an image 41a corresponding to the projection film content. The image capturing unit 43 captures the image 41a to output a first video signal V1. The first processing unit 14, electrically coupled to the image capturing unit 43, receives and processes the first video signal V1 to output a second video signal V2 to the AV encoding unit 15.

One who has general knowledge in the field of skills the example belongs to will know that the skill of the invention is not limited thereto. For example, the image capturing unit 43 includes a complementary metal-oxide semiconductor or a charge coupled device (CCD). Moreover, the light emitting unit 41b can be a bulb, a lamp or a plane light source while the projecting unit 48 can be composed of an optics lens and mirrors.

By using the projecting device capable of synchronously encoding images and sounds into an AV synchronous play file according to the above-mentioned embodiments of the invention, images and sounds of the presenter as giving a brief are synchronously encoded into an AV synchronous play file so that the audience can open the AV synchronous play file to read the image content while listening to the sound corresponding to the image in the future. Therefore, the audience can quickly regain the lively feeling as attending the brief before and achieve the purpose of reviewing and revising the brief materials. It can be prevented not only the unfamiliar feeling occurred as reviewing the brief materials in the future but also the confusing issue due to inconsistency of the brief materials from beginning to end in the future review, thereby greatly increasing practicality of the projecting device.

While the invention has been described by way of example and in terms of a preferred embodiment, it is to be understood that the invention is not limited thereto. On the contrary, it is intended to cover various modifications and similar arrangements and procedures, and the scope of the appended claims therefore should be accorded the broadest interpretation so as to encompass all such modifications and similar arrangements and procedures.

## Claims

1. A projecting device (10), comprising:
a receiving unit (13), for receiving and outputting a first video signal (V1);
a first processing unit (14), electrically coupled to the receiving unit (13), for receiving and processing the first video signal (V1) and outputting a second video signal (V2) accordingly;
a projecting unit (18), electrically coupled to the first processing unit (14), for receiving the second video signal (V2) and projecting an image (22) corresponding to the second video signal (V2) onto a wall;
**characterized in that** said projecting device (10) is capable of synchronously encoding images and sounds into an audio/video (AV) play file and further comprises:
a sound-recording unit (11), for recording sounds (S) of a user as explaining the image (22) corresponding to the second video signal (V2) and outputting a first audio signal (A1) accordingly;
a second processing unit (12), electrically coupled to the sound-recording unit (11), for receiving and processing the first audio signal (A1) and outputting a second audio signal (A2) accordingly; and
an AV encoding unit (15), electrically coupled to the first processing unit (14) and the second processing unit (12), for receiving and synchronously encoding the second video signal (V2) and the second audio signal (A2) and outputting an AV synchronous play file (AV) accordingly.

2. The projecting device (10) according to claim 1, further comprising:
a storage unit (16), electrically coupled to the AV encoding unit (15), for receiving and storing the AV synchronous play file (AV).

3. The projecting device (10) according to claim 2, further comprising:
an output unit (17), electrically coupled to the storage unit (16), for outputting the AV synchronous play file (AV) to a recording medium (20).

4. The projecting device (10) according to claim 1, further comprising:
an operation unit (19), electrically coupled to the sound-recording unit (11) and the AV encoding unit (15), wherein the projecting device (10) actuates the sound-recording unit (11) and the AV encoding unit (15) as the operation unit (19) is pressed.

5. The projecting device (10) according to claim 4, wherein when the operation unit (19) is pressed once again, the projecting device (10) stops the operation of the sound-recording unit (11) and the AV encoding unit (15).

6. The projecting device according to claim 1, wherein the receiving unit (13) is electrically coupled to an electronic device (21) for receiving the first video signal (V1) output by the electronic device (21).

## Patentansprüche

1. Projektionsvorrichtung (10), umfassend:
eine Empfangseinheit (13) zum Empfangen und Ausgeben eines ersten Videosignals (V1);
eine erste Verarbeitungseinheit (14), die elektrisch mit der Empfangseinheit (13) gekoppelt ist, um das erste Videosignal (V1) zu empfangen und zu bearbeiten, und ein zweites Videosignal (V2) entsprechend auszugeben;
eine Projektionseinheit (18), die mit der ersten Verarbeitungseinheit (14) elektrisch gekoppelt ist, um das zweite Videosignal (V2) zu empfangen und ein zu dem zweiten Videosignal (V2) korrespondierendes Bild (22) auf eine Wand zu projizieren;
**dadurch gekennzeichnet, dass** die Projektionsvorrichtung (10) synchron Bilder und Töne in eine Audio/Video (AV)-Wiedergabedatei kodieren kann, und ferner umfasst:
eine Tonaufnahmeeinheit (11), um Töne (S) eines Nutzers aufzunehmen, während dieser das zu dem zweiten Videosignal (V2) korrespondierende Bild (22) erklärt, und ein erstes Audiosignal entsprechend auszugeben (A1);
eine zweite Verarbeitungseinheit (12), die elektrisch mit der Tonaufnahmeeinheit (11) gekoppelt ist, um das erste Audiosignal (A1) zu empfangen und zu bearbeiten, und ein zweites Audiosignal (A2) entsprechend auszugeben; und
eine AV-Kodierungseinheit (15), die mit der ersten Verarbeitungseinheit (14) und der zweiten Verarbeitungseinheit (12) elektrisch gekoppelt ist, um das zweite Videosignal (V2) und das zweite Audiosignal (A2) zu empfangen und synchron zu kodieren, und eine AV-Synchron-Wiedergabedatei (AV) entsprechend auszugeben.

2. Projektionsvorrichtung (10) gemäß Anspruch 1, ferner umfassend:
eine Speichereinheit (16), die elektrisch mit der AV-Kodierungseinheit (15) gekoppelt ist, um die AV-Synchron-Wiedergabedatei (AV) zu empfangen und zu speichern.

3. Projektionsvorrichtung (10) gemäß Anspruch 2, ferner umfassend:
eine Ausgabeeinheit (17), die elektrisch mit der Speichereinheit (16) gekoppelt ist, um die AV-Synchron-Wiedergabedatei (AV) an ein Aufnahmemedium (20) auszugeben.

4. Projektionsvorrichtung (10) gemäß Anspruch 1, ferner umfassend:
eine Betriebseinheit (19), die elektrisch mit der Tonaufnahmeeinheit (11) und der AV-Kodierungseinheit (15) gekoppelt ist, wobei die Projektionsvorrichtung (10) die Tonaufnahmeeinheit (11) und die AV-Kodierungseinheit (15) in Betrieb setzt, wenn die Betriebseinheit (19) betätigt wird.

5. Projektionsvorrichtung (10) gemäß Anspruch 4, wobei, wenn die Betriebseinheit (19) noch einmal betätigt wird, die Projektionsvorrichtung (10) den Betrieb der Tonaufnahmeeinheit (11) und der AV-Kodierungseinheit (15) beendet.

6. Projektionsvorrichtung gemäß Anspruch 1, wobei die Empfangseinheit (13) elektrisch mit einer elektronischen Vorrichtung (21) gekoppelt ist, um das erste von der elektronischen Vorrichtung (21) ausgegebene Videosignal (V1) zu empfangen.

## Revendications

1. Dispositif de projection (10), comprenant :
une unité de réception (13), destinée à recevoir et à transmettre un premier signal vidéo (V1) ;
une première unité de traitement (14), couplée électriquement à l'unité de réception (13), destinée à recevoir et à traiter le premier signal vidéo (V1) et à transmettre un second signal vidéo (V2) en conséquence ;
une unité de projection (18), couplée électriquement à la première unité de traitement (14), destinée à recevoir le second signal vidéo (V2) et à projeter une image (22) correspondant au second signal vidéo (V2) sur un mur ;
**caractérisé en ce que** ledit dispositif de projection (10) est capable de coder de manière synchrone des images et des sons en un fichier de lecture audio/vidéo (AV) et comprend en outre :
une unité d'enregistrement de sons (11), destinée à enregistrer des sons (S) d'un utilisateur expliquant l'image (22) correspondant au second signal vidéo (V2) et à transmettre un premier signal audio (A1) en conséquence;
une seconde unité de traitement (12), couplée électriquement à l'unité d'enregistrement de sons (11), destinée à recevoir et à traiter le premier signal audio (A1) et à transmettre un second signal audio (A2) en conséquence ; et
une unité de codage AV (15), couplée électriquement à la première unité de traitement (14) et à la seconde unité de traitement (12), destinée à recevoir et à coder de manière synchrone le second signal vidéo (V2) et le second signal audio (A2) et à transmettre un fichier de lecture AV synchrone (AV) en conséquence.

2. Dispositif de projection (10) selon la revendication 1, comprenant en outre :
une unité de stockage (16), couplée électriquement à l'unité de codage AV (15), destinée à recevoir et à stocker le fichier de lecture AV synchrone (AV).

3. Dispositif de projection (10) selon la revendication 2, comprenant en outre :
une unité de sortie (17), couplée électriquement à l'unité de stockage (16), destinée à transmettre le fichier de lecture AV synchrone (AV) à un support d'enregistrement (20).

4. Dispositif de projection (10) selon la revendication 1, comprenant en outre :
une unité d'exploitation (19), couplée électriquement à l'unité d'enregistrement de sons (11) et à l'unité de codage AV (15), dans laquelle le dispositif de projection (10) actionne l'unité d'enregistrement de sons (11) et l'unité de codage AV (15) lorsque l'unité d'exploitation (19) est enclenchée.

5. Dispositif de projection (10) selon la revendication 4, dans lequel, lorsque l'unité d'exploitation (19) est enclenchée à nouveau, le dispositif de projection (10) arrête le fonctionnement de l'unité d'enregistrement de sons (11) et de l'unité de codage AV (15).

6. Dispositif de projection selon la revendication 1, dans lequel l'unité de réception (13) est couplée électriquement à un dispositif électronique (21) afin de recevoir le premier signal vidéo (V1) transmis par le dispositif électronique (21).
